# EUROPÄISCHE PATENTSCHRIFT

(11) **EP 2 660 747 B1**
(45) Veröffentlichungstag und Bekanntmachung des Hinweises auf die Patenterteilung: **21.06.2017**
(21) Anmeldenummer: 13001932.6
(22) Anmeldetag: 12.04.2013
(51) Int. Cl.: G06F 21/12, G06F 21/53, G06F 21/57, G06F 21/77, G06F 21/71

(54) **Sicherheitsmodul**
Safety module
Module de sécurité

(30) Priorität: 04.05.2012 DE 102012008988
(43) Veröffentlichungstag der Anmeldung: 06.11.2013
(73) Patentinhaber: Giesecke & Devrient GmbH, 81677 München (DE)
(72) Erfinder: Baldischweiler, Michael, 81825 München (DE); Stocker, Thomas, 81739 München (DE)

(56) Entgegenhaltungen:
- WO-A1-2007/087073
- DE-B4-102004 011 488

## Beschreibung

Die vorliegende Erfindung betrifft ein Verfahren zum Ausführen einer Applikation auf einem Sicherheitsmodul, welche dort gemäß einem Zwischencode codiert vorliegt, wobei der Zwischencode zum Ausführen der Applikation auf dem Sicherheitsmodul interpretiert wird, sowie ein entsprechendes Sicherheitsmodul.

Als Zwischencode wird im Zusammenhang mit der vorliegenden Erfindung ein Code in einer Sprache verstanden, welche zwischen einem Code eines Quelltextes einer Hochsprache, beispielsweise der Programmiersprachen "Java" oder "C", auf der einen Seite und einer maschinennahen Zielsprache, insbesondere einem Maschinencode, auf der anderen Seite angeordnet ist. Bekannte Beispiele für einen solchen Zwischencode sind so genannte Bytecodes, wie z.B. Java- oder Java Card™-Bytecode. Mittels eines Compilers kann ein Quelltext einer Hochsprache in einen Zwischencode compiliert oder übersetzt werden. Zum Interpretieren eines solchen Zwischencodes, welcher in der Regel plattformunabhängig ist, kann ein "virtueller Prozessor", insbesondere eine so genannte Virtuelle Maschine verwendet werden. Diese interpretiert den Zwischencode und ordnet dabei entsprechenden Codewörtern des Zwischencodes zur Laufzeit Codewörter eines Maschinencodes zu, welche durch den entsprechenden Prozessor der vorliegenden Plattform - plattformabhängig - unterstützt werden.

Sicherheitsmodule, z.B. Chipkarten, sind hinsichtlich ihrer Ressourcen, insbesondere hinsichtlich Speicherkapazität und Prozessorleistung, bauartbedingt limitiert. Eine gemäß einem Zwischencode codierte Applikation kann sehr kompakt und daher speichereffizient dargestellt werden. Weiterhin kann ein solcher Zwischencode mittels jeweils spezifisch angepasster Virtueller Maschinen auf verschiedenen Architekturen, d.h. insbesondere auf Sicherheitsmodulen mit unterschiedlichen Prozessoren, unverändert gespeichert und dann entsprechend ausgeführt werden.

Angriffe auf Sicherheitsmodule, insbesondere Chipkarten, können ein erhebliches Sicherheitsrisiko sowohl für den individuellen Nutzer des Sicherheitsmoduls als auch für einen Hersteller der Sicherheitsmoduls darstellen. Die Art der Angriffe ist mannigfaltig. Sie reicht beispielsweise von bloßem Abhören einer Datenkommunikationsverbindung zwischen einem solchen Sicherheitsmodul und einem Endgerät über das Auswerten des Ressourcenverbrauchs des Sicherheitsmoduls beim Durchführen einer Berechnung, beispielsweise des Stromverbrauchs oder der Rechenzeit, bis hin zu technisch sehr aufwendigen Angriffen. Dabei werden beispielsweise Berechnungen des Prozessors des Sicherheitsmoduls gezielt dadurch gestört, dass mittels externen Einwirkens auf das Sicherheitsmodul, beispielsweise mittels gezielter Lichtblitze auf einzelne Speicherzellen eines Speichers des Sicherheitsmoduls, Eingabedaten oder Zwischenergebnisse einer Berechnung manipuliert werden, um anhand der dadurch erhaltenen, manipulierten Ergebnisse auf in dem Sicherheitsmodul gespeicherte sensible Daten, beispielsweise Verschlüsselungsschlüssel, zurückzuschließen.

Aus Sicht des individuellen Nutzers können bei einem solchen Angriff persönliche oder sonstige sensible Daten, beispielsweise geheime Schlüssel, ausgespäht werden. Für einen Hersteller der Sicherheitsmodule kann bereits ein erfolgreicher Angriff auf ein Sicherheitsmodul einer Serie baugleicher Sicherheitsmodule, neben dem Imageverlust, einen erheblichen Schaden bedeuten, da dann möglicherweise die ganze Serie von Sicherheitsmodulen als kompromittiert angesehen und daher zurückgerufen oder ersetzt werden muss.

In der DE 10 2004 011 488 B4 wird zum Schutz von auf einem Datenträger gespeicherter Software vorgeschlagen, die Software jeweils datenträgerindividuell oder zumindest jeweils für eine Gruppe von Datenträgern - bei unveränderter Funktionalität - in dem jeweiligen Datenträger derart abzuspeichern, dass sich für den individuellen Datenträger bzw. jede Gruppe von Datenträgern jeweils eine unterschiedliche Speicherbelegung ergibt. Dies kann beispielsweise dadurch geschehen, dass verschiedene Anteile des die Software darstellenden Codes hinsichtlich einer Ausgangsanordnung verschoben und/ oder vertauscht werden. Weiter ist es möglich, in vorzugsweise unregelmäßiger oder zufälliger Weise Codeanteile in die Software einzufügen, die für die Funktionalität der Software ohne Auswirkung sind.

Aufgabe der vorliegenden Erfindung ist es, Sicherheitsmodule mit darauf ausführbaren Applikationen gegen externe Angriffe zu schützen. Insbesondere sollen die Auswirkungen, welche ein erfolgreicher Angriff auf ein Sicherheitsmodul für andere, baugleiche Sicherheitsmodule hat, begrenzt werden.

Diese Aufgabe wird durch ein Verfahren und ein Sicherheitsmodul mit den Merkmalen der unabhängigen Ansprüche gelöst. Vorteilhafte Ausgestaltungen und Weiterbildungen sind in den abhängigen Ansprüchen angegeben. Die vorliegende Erfindung basiert auf der Grundidee, für ein individuelles Sicherheitsmodul oder für Gruppen von Sicherheitsmodulen jeweils einen sicherheitsmodulspezifischen, d.h. sicherheitsmodul- oder gruppenindividuellen Zwischencode vorzusehen, in den eine gemäß einem vorgegebenen Zwischencode, beispielsweise dem genormten Java Card™-Bytecode, vorliegende Applikation umgewandelt wird und welcher in dem jeweiligen Sicherheitsmodul direkt sicherheitsmodulspezifisch interpretierbar ist. Der sicherheitsmodulspezifische Zwischencode wird dabei zudem abhängig von der für den integrierten Schaltkreis des Sicherheitsmoduls spezifischen Reaktion auf einen vorgegebenen, potentiellen Angriff auf das Sicherheitsmodul ausgewählt.

Somit umfasst ein erfindungsgemäßes Verfahren zum Ausführen einer Applikation auf einem Sicherheitsmodul, welche gemäß einem Zwischencode codiert vorliegt, wobei zum Ausführen der Applikation auf dem Sicherheitsmodul der Zwischencode interpretiert wird, die folgenden Schritte: Eine gemäß einem vorgegebenen Zwischencode codierte Applikation wird in einen auswählbaren, sicherheitsmodulspezifischen Zwischencode umgewandelt. Der sicherheitsmodulspezifische Zwischencode wird dabei zudem abhängig von der für den integrierten Schaltkreis des Sicherheitsmoduls spezifischen Reaktion auf einen vorgegebenen, potentiellen Angriff auf das Sicherheitsmodul ausgewählt. Die in den sicherheitsmodulspezifischen Zwischencode umgewandelte Applikation wird dann in dem Sicherheitsmodul gespeichert. Schließlich wird die in dem sicherheitsmodulspezifischen Zwischencode gespeicherte Applikation in dem Sicherheitsmodul zum Ausführen der Applikation interpretiert.

Eine erfindungsgemäße Umwandlungseinrichtung ist entsprechend eingerichtet, eine gemäß einem vorgegebenen Zwischencode codierte Applikation in einen auswählbaren, sicherheitsmodulspezifischen Zwischencode umzuwandeln. Der sicherheitsmodulspezifische Zwischencode wird abhängig von der für den integrierten Schaltkreis des Sicherheitsmoduls spezifischen Reaktion auf einen vorgegebenen, potentiellen Angriff auf das Sicherheitsmodul ausgewählt. Die Umwandlungseinrichtung ist entweder eine Vorrichtung zur Umwandlung von Zwischencode für (verschiedene) Sicherheitsmodule oder Teil eines Sicherheitsmoduls.

Ein erfindungsgemäßes Sicherheitsmodul umfasst zumindest einen Speicher zum Speichern einer Applikation sowie einen Prozessor zum Ausführen der Applikation. Insbesondere umfasst das Sicherheitsmodul eine Interpretationseinrichtung, die eingerichtet ist, eine in dem Speicher des Sicherheitsmoduls gemäß einem sicherheitsmodulspezifischen Zwischencode gespeicherte Applikation zum Ausführen der Applikation zu interpretieren und eine entsprechende Umwandlungseinrichtung.

Auf diese Weise können verschiedene Angriffe auf ein Sicherheitsmodul wirkungsvoll verhindert oder zumindest deutlich erschwert werden. Der sicherheitsmodulspezifische Zwischencode ermöglicht es insbesondere sicherzustellen, dass ein Angreifer aus einem erfolgreichen Angriff auf einen erstes Sicherheitsmodul, auf welchem Applikationen gemäß einem ersten Zwischencode gespeichert sind, keine Rückschlüsse auf die Angreifbarkeit eines zweiten, baugleichen Sicherheitsmoduls ziehen kann, auf welchem Applikationen gemäß einem von dem ersten Zwischencode abweichenden zweiten Zwischencode gespeichert sind. Damit kann verhindert werden, dass ein erfolgreicher Angriff auf Sicherheitsmodule eines ersten Anwendungsgebiets Auswirkungen auf baugleiche Sicherheitsmodule eines zweiten Anwendungsgebiets hat, sofern der Angriff auf den Zwischencode, insbesondere also eine Bytecode-Interpretation, des Sicherheitsmoduls gerichtet ist. Dieser Fall tritt auf, wenn Sicherheitsmodule aus verschiedenen Anwendungsbereichen, beispielsweise aus den Bereichen Telekommunikation, Banking, PayTV, etc., auf einer identischen Produktlinienarchitektur beruhen. Solche Sicherheitsmodule haben dann hinsichtlich der Ausführung von in einem vorgegebenen Zwischencode vorliegenden Applikationen dasselbe physikalische Verhalten, so dass ein erfolgreicher Angriff auf ein Sicherheitsmodul aus einem Anwendungsbereich, beispielsweise eine Kreditkarte, negative Auswirkungen auf die Sicherheit eines Sicherheitsmoduls aus einem ganz anderen Bereich, beispielsweise eine SIM-Karte, haben könnte.

Vorzugsweise wird in dem Schritt des Umwandelns die Reaktion des integrierten Schaltkreises berücksichtigt für zumindest zwei unterschiedliche Angriffstypen und/oder zumindest zwei unterschiedliche Reaktionen auf einen Angriffstyp. Es gibt eine Vielzahl unterschiedlicher Angriffstypen, beispielsweise mittels Licht, Mikrowelle oder Spannungsspitzen. Ein Sicherheitsmodul bzw. sein integrierter Schaltkreis kann auf einen Angriffstyp eine oder mehrere spezifische Reaktionen zeigen. Die spezifische Reaktion für den Angriffstyp betrifft die Speicherung und/ oder die Verarbeitung des Zwischencodes. Insbesondere ist die spezifische Reaktion zwar regelmäßig bekannt oder bestimmbar, wird aber nicht (per se) durch das Sicherheitsmodul als Angriff erkannt und/oder verhindert. Wichtigste Beispiele für spezifische Reaktionen sind bevorzugte Kippverhalten des Speichers (Bits kippen einzeln, paarweise oder als Byte; 1=>0 oder 0=>1) aber auch Reaktionen des Prozessors.

Der sicherheitsmodulspezifische Zwischencode kann gemäß weiteren spezifischen Abhängigkeiten von potentiellen Angriffen und/ oder konkreten Gegebenheiten des Sicherheitsmoduls und dessen Hard- und Softwareausstattung ausgewählt werden.

Ein weiterer Vorteil der Erfindung ergibt sich daraus, dass der sicherheitsmodulspezifische Zwischencode grundsätzlich frei gewählt werden kann. Auf diese Weise wird es möglich, den Zwischencode so zu gestalten, dass Angriffe, welche auf der spezifischen Codierung des bekannten Zwischencodes beruhen, dadurch abgewehrt werden können, dass bis dahin vorzugsweise angegriffene Codewörter abgeändert werden und/ oder solche Codewörter, die sich mittels eines Angriffs leicht erzeugen lassen, auf eine Fehlerroutine umgeleitet werden. Mit anderen Worten, der sicherheitsmodulspezifische Zwischencode kann derart ausgewählt werden, dass ein Angriff auf den Zwischencode für einen Angreifer dadurch erheblich erschwert wird, dass eine Anzahl der zum Erreichen eines spezifischen Angriffsziels erforderlichen, erfolgreichen Manipulationen an einer Berechnung in dem Sicherheitsmodul im Vergleich zu einem entsprechenden Angriff auf ein Sicherheitsmodul mit einer Applikation gemäß dem bekannten Zwischencode erheblich erhöht ist. Dadurch verringert sich die Wahrscheinlichkeit, dass ein Angreifer sein Ziel erreicht, beträchtlich.

Ein Sicherheitsmodul kann als tragbarer Datenträger, wie Chipkarte, RFID-Transponder oder USB-Token, ausgebildet sein oder als fest in ein Endgerät integrierter Datenträger, wie TPM-Modul, NFC-Modul oder SIM-Modul, ausgebildet sein. Sofern also vorliegend - auch in der Figurenbeschreibung - teilweise auf einen (tragbaren) Datenträger Bezug genommen wird, ist jeweils auch das Sicherheitsmodul gemeint.

Vorzugsweise wird die in dem sicherheitsmodulspezifischen Zwischencode vorliegende Applikation in dem Sicherheitsmodul direkt interpretiert, d.h. dass insbesondere keine vorhergehende Rückumwandlung des sicherheitsmodulspezifischen Zwischencodes in den vorgegebenen Zwischencode erfolgt oder erforderlich ist. Dadurch können Ressourcen des Sicherheitsmoduls geschont werden. Weiterhin können auf diese Weise solche Angriffe auf das Sicherheitsmodul, welche darauf beruhen, dass vor dem Ausführen der Applikation erst der rückübersetzte Zwischencode angegriffen wird, verhindert werden.

Der Schritt des direkten Interpretierens des sicherheitsmodulspezifischen Zwischencodes kann mit Hilfe einer sicherheitsmodulspezifischen Vorgabe, insbesondere einer sicherheitsmodulspezifischen Sprungtabelle oder einer sicherheitsmodulspezifischen Sprung-Anweisung, durchgeführt werden. Die sicherheitsmodulspezifische Vorgabe ordnet dabei vorgegebenen Codewörtern des sicherheitsmodulspezifischen Zwischencodes vorgegebene Maschinenoperationen eines Prozessors des Sicherheitsmoduls zu. Wie bereits erwähnt, können die Codewörter des sicherheitsmodulspezifischen Zwischencodes grundsätzlich frei gewählt werden. Die sicherheitsmodulspezifische Vorgabe, auf welche das Sicherheitsmodul bzw. die Interpretationseinrichtung des Sicherheitsmoduls beim Interpretieren des sicherheitsmodulspezifischen Zwischencodes zugreift, kann jeweils an diesen sicherheitsmodulspezifischen Zwischencode angepasst werden. Somit umfasst jedes Sicherheitsmodul beispielsweise eine an den sicherheitsmodulspezifischen Zwischencode angepasste sicherheitsmodulspezifische Sprungtabelle.

Gemäß einer ersten Ausführungsform des erfindungsgemäßen Verfahrens wird der Schritt des Umwandelns der in den vorgegebenen Zwischencode codierten Applikation in den sicherheitsmodulspezifischen Zwischencode außerhalb des Sicherheitsmoduls durchgeführt. D.h. die Applikation wird bereits gemäß dem sicherheitsmodulspezifischen Zwischencode codiert in das Sicherheitsmodul eingebracht und lediglich gemäß dem sicherheitsmodulspezifischen Zwischencode codiert in dem Speicher des Sicherheitsmoduls gespeichert. Die vorstehend beschriebene, sicherheitsmodulspezifische Vorgabe kann zusammen mit dem sicherheitsmodulspezifischen Zwischencode in das Sicherheitsmodul eingebracht werden. Gemäß dieser Ausführungsform ist es nicht notwendig, dass in dem Sicherheitsmodul selbst Funktionalitäten zum Umwandeln des vorgegebenen Zwischencodes in den sicherheitsmodulspezifischen Zwischencode implementiert sind.

Gemäß einer zweiten Ausführungsform des erfindungsgemäßen Verfahrens wird der Schritt des Umwandelns der in dem vorgegebenen Zwischencode codierten Applikation in den sicherheitsmodulspezifischen Zwischencode in dem Sicherheitsmodul durchgeführt. Dazu umfasst das Sicherheitsmodul eine entsprechend eingerichtete Umwandlungseinrichtung. Diese ist eingerichtet, eine gemäß dem vorgegebenen Zwischencode codierte Applikation in den sicherheitsmodulspezifischen Zwischencode umzuwandeln.

Der Schritt des Umwandelns kann dabei gemäß einer ersten Variante erst direkt vor dem Interpretieren des Zwischencodes erfolgen. D.h. die Interpretationseinrichtung des Sicherheitsmoduls wandelt beim Interpretieren jedes aktuell zu interpretierenden Codewortes des vorgegebenen Zwischencodes zuerst das betreffende Codewort in ein Codewort gemäß dem sicherheitsmodulspezifischen Zwischencode um und interpretiert dann dieses gemäß der genannten, sicherheitsmodulspezifischen Vorgabe, beispielsweise der genannten Sprungtabelle.

Gemäß einer bevorzugten zweiten Variante jedoch erfolgt das Umwandeln beispielsweise bereits beim Laden der Applikation in einen nichtflüchtigen Speicher des Sicherheitsmoduls oder spätestens beim Laden der Applikation in einen flüchtigen Arbeitsspeicher des Sicherheitsmoduls.

Das Umwandeln des vorgegebenen Zwischencodes in den sicherheitsmodulspezifischen Zwischencode kann vorteilhaft mittels einer dazu eingerichteten Umwandlungstabelle erfolgen. Diese Umwandlungstabelle, auf welche die Umwandlungseinrichtung des Sicherheitsmoduls beim Umwandeln des vorgegebenen Zwischencodes in den sicherheitsmodulspezifischen Zwischencode zugreifen kann, kann beispielsweise derart aufgebaut sein, dass ein Codewort des vorgegebenen Zwischencodes jeweils einen Index der Umwandlungstabelle darstellt. Der Tabellenwert zu diesem Index entspricht dann dem entsprechenden Codewort des sicherheitsmodulspezifischen Zwischencodes. Auf diese Weise kann ein Umwandeln speichereffizient und mit wenigen Rechenoperationen implementiert werden.

Wie bereits mehrfach erwähnt, kann der sicherheitsmodulspezifische Zwischencode grundsätzlich frei gewählt werden. Die Parameter, welche eine Auswahl und ein Design des sicherheitsmodulspezifischen Zwischencodes bestimmen, können verschiedene sein.

Zum einen kann der sicherheitsmodulspezifische Zwischencode sicherheitsmodulindividuell oder abhängig von einer technischen Anwendung des Sicherheitsmoduls ausgewählt werden. Auf diese Weise wird, wie bereits beschrieben, erreicht, dass ein erfolgreicher Angriff auf ein Sicherheitsmodul bzw. ein Sicherheitsmodul einer Gruppe von Sicherheitsmodulen, welche einer vorgegebenen ersten Anwendung dienen, beispielsweise im Zahlungsverkehr, zumindest keine negativen Auswirkungen auf die Sicherheit eines zweiten Sicherheitsmoduls bzw. eine zweite Gruppe von baugleichen Sicherheitsmodulen hat, welche einer vorgegebenen zweiten Anwendung dienen, beispielsweise im Bereich Telekommunikation.

Weiterhin kann der sicherheitsmodulspezifische Zwischencode abhängig von einem integrierten Schaltkreis des Sicherheitsmoduls, insbesondere abhängig von den gegebenen Ressourcen, wie insbesondere dem vorhandenen Speicher, sowie abhängig von spezifischen Schwächen des Schaltkreises, ausgewählt werden. Eine genannte Schwäche kann beispielsweise darin liegen, dass bei einem bestimmten Typ von Sicherheitsmodul ein Angriff, welcher ein vorgegebenes Codewort in einem Speicher des Sicherheitsmoduls erzeugt, besonders einfach durchzuführen ist.

Schließlich kann der sicherheitsmodulspezifische Zwischencode abhängig von vorgegebenen, bekannten potentiellen Angriffen auf das Sicherheitsmodul ausgewählt werden. Solche Angriffe können konkret das Design des vorgegebenen Zwischencodes, aus dem der sicherheitsmodulspezifische Zwischencode abgeleitet worden ist, auszunutzen versuchen. Einige konkrete Beispiele von sicherheitsmodulspezifischen Zwischencodes, welche abhängig von einem Sicherheitsmodul, dessen Ressourcen und/ oder dessen Schwächen bzw. abhängig von einem konkreten Angriff auf den vorgegebenen Zwischencode ausgewählt werden, sind nachfolgend exemplarisch angegeben. Die Liste ließe sich problemlos erweitern.

Im Zusammenhang mit dem sicherheitsmodulspezifischen Zwischencode können Codierung und/ oder Codelänge variieren. Dadurch kann Einfluss auf den Speicherbedarf zum Speichern einer gemäß dem sicherheitsmodulspezifischen Zwischencode gespeicherten Applikation genommen werden sowie auf den Hammingabstand einzelner Codewörter des sicherheitsmodulspezifischen Zwischencodes zueinander. Eine Umwandlung des vorgegebenen Zwischencodes in den sicherheitsmodulspezifischen Zwischencode kann dann, wie beschrieben, besonders einfach erfolgen, wenn die entsprechenden Codes dieselbe Länge haben und die Codewörter des einen Codes einer geeigneten Permutation der Codewörter des anderen Codes entsprechen.

Da in der Regel der zur Verfügung stehende Coderaum, bei einem 2-ByteCode stehen beispielsweise 256 Codewörter zur Verfügung, von den zu codierenden Befehlen nicht vollständig belegt ist, besteht weiterhin die Möglichkeit, diejenigen Codewörter, welche Fehlercodes entsprechen, d.h. denen keine Maschinenoperation zugeordnet ist und die vom Sicherheitsmodul als Fehlercodes erkannt werden, frei und geeignet auszuwählen. Dies kann beispielsweise derart geschehen, dass solche Codewörter, die sich mittels eines Angriffs - gegebenenfalls Sicherheitsmodul- bzw. prozessorspezifisch - am einfachsten oder am wahrscheinlichsten erzeugen lassen, mit einem Fehlercode belegt werden. Ein ungültiger Wert für einen Wert des Zwischencode wird als Fehlercode bezeichnet. Beim Interpretieren identifiziert das Sicherheitsmodul einen Fehlercode als ungültigen Wert. Das Sicherheitsmodul erkennt einen Fehlercode als Angriff auf das Sicherheitsmodul. Er reagiert auf den erkannten Angriff mit einer Abwehmaßnahme. Abwehmaßnahmen sind hinreichend aus dem Stand der Technik bekannt, wie beispielsweise: ein Sperren der Funktion oder des Sicherheitsmoduls, ein Beeinflussen eines Fehler- oder Angriffszählers, ein Reset oder ein Sprung in eine Endlosschleife.

Insbesondere wird entsprechend die Anordnung von Fehlercodes im verfügbaren Codierungsraum für Werte des Zwischencodes im Schritt des Auswählens angepasst.

Auf diese Weise können bereits eine Vielzahl von Angriffen erkannt und abgewehrt werden.

Weiterhin besteht die Möglichkeit, die Codewörter des sicherheitsmodulspezifischen Zwischencodes so zu wählen, dass die Wahrscheinlichkeit, dass mittels eines Angriffs - für das Sicherheitsmodul unbemerkt - ein gültiges Codewort zu einem anderen gültigen Codewort verändert wird, gering ist. Dies sollte insbesondere für Codewörter gelten, die ähnliche Operationen codieren, beispielsweise die arithmetischen Operationen "+" und "-" oder dergleichen. Eine Codierung derart, dass die entsprechenden Codewörter einen hinreichenden Hammingabstand aufweisen, dass also eine Mehrzahl von erfolgreichen Bitmanipulationen zur Veränderung des einen Codeworts zu dem anderen Codewort erforderlich sind, ist hier vorteilhaft. In gleicher Weise kann es vorgesehen sein, dass wichtige Codewörter, d.h. solche Codewörter, die wesentliche Operationen codieren, zu anderen gültigen Codewörtern, d.h. Codewörtern, die keine Fehlercodes sind, jeweils einen hinreichenden Hammingabstand haben, falls die Länge des ausgewählten sicherheitsmodulspezifischen Zwischencodes dies erlaubt. Bevorzugt kann also insgesamt eine Anordnung erster gültiger Codewörter zu zweiten gültigen Codewörtern im verfügbaren Codierungsraum für Werte des Zwischencodes ausgewählt werden.

Gemäß einer bevorzugten Ausführungsform des erfindungsgemäßen Verfahrens ist der vorgegebene Zwischencode als Bytecode, vorzugsweise als Bytecode gemäß der Java Card™-Spezifikation, vorgegeben. Der sicherheitsmodulspezifische Zwischencode wird dann vorzugsweise ebenfalls als ein Bytecode gewählt. Vorzugsweise, aber nicht notwendig, ergeben sich die Codewörter des sicherheitsmodulspezifischen Zwischencodes durch eine Permutation der Codewörter des vorgegebenen Bytecodes. In der Regel erfolgt dann das Interpretieren des sicherheitsmodulspezifischen Zwischencodes mittels einer auf dem Sicherheitsmodul ausführbaren virtuellen Maschine, vorzugsweise einer sicherheitsmodulspezifisch angepassten Java Card™-Virtuellen Maschine. Die sicherheitsmodulspezifische Anpassung der genannten Virtuellen Maschine besteht dabei insbesondere darin, dass die Virtuelle Maschine Zugriff auf eine sicherheitsmodulspezifische Vorgabe zum Interpretieren des sicherheitsmodulspezifischen Zwischencodes hat, insbesondere auf eine bereits genannte, sicherheitsmodulspezifische Sprungtabelle oder dergleichen.

Entsprechend ist der erfindungsgemäße Datenträger vorzugsweise als Java Card™ ausgebildet und die Interpretationseinrichtung umfasst eine Java Card™-Virtuelle Maschine.

Im Folgenden wird die vorliegende Erfindung mit Bezug auf die beiliegenden Zeichnungen beispielhaft beschrieben. Darin zeigen
- Figur 1: eine bevorzugte Ausführungsform eines erfindungsgemäßen Sicherheitsmoduls und
- Figur 2: Schritte einer bevorzugten Ausführungsform eines erfindungsgemäßen Verfahrens.

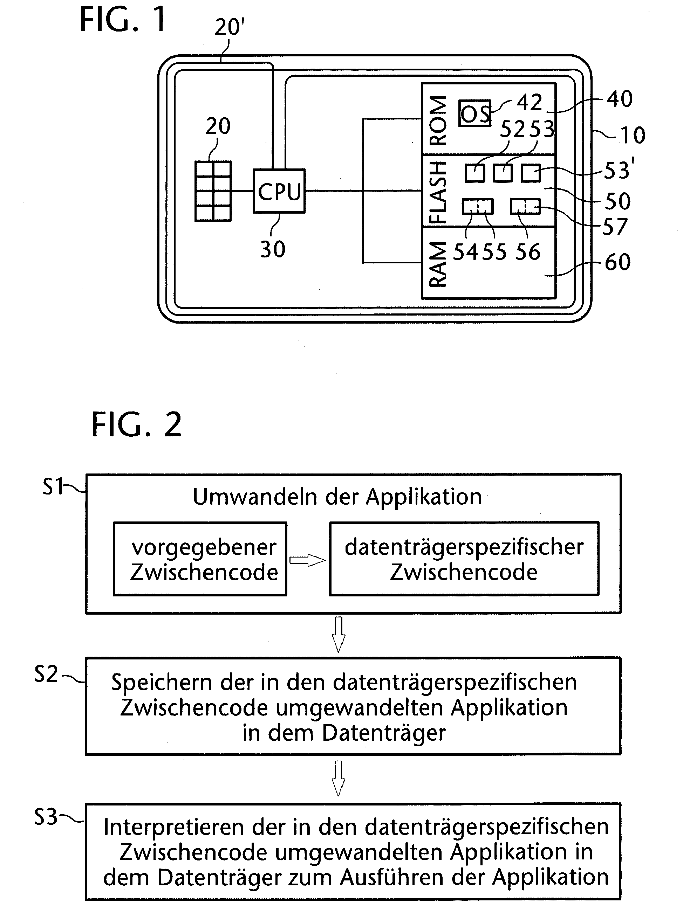

Mit Bezug auf Fig. 1 umfasst ein Datenträger 10, der hier als Chipkarte dargestellt ist, Datenkommunikationsschnittstellen 20, 20', einen Prozessor 30 sowie verschiedene Speicher 40, 50 und 60. Der Datenträger 10 kann auch in anderer Bauform vorliegen.

Als Datenkommunikationsschnittstellen 20, 20' umfasst der Datenträger 10 ein Kontaktfeld 20 zur kontaktbehafteten Datenkommunikation sowie eine Antennenspule 20' zur kontaktlosen Datenkommunikation. Alternative Datenkommunikationsschnittstellen können vorgesehen sein. Es ist weiterhin möglich, dass der Datenträger 10 lediglich eine Art der Datenkommunikation unterstützt, also lediglich kontaktbehaftet oder kontaktlos.

Der nicht flüchtige, nicht wiederbeschreibbare ROM-Speicher 40 umfasst ein Betriebssystem (OS) 42 des Datenträgers 10, welches den Datenträger 10 steuert. Zumindest Teile des Betriebssystems 42 können auch in dem nicht flüchtigen, wiederbeschreibbaren Speicher 50 gespeichert sein. Dieser kann beispielsweise als FLASH-Speicher vorliegen.

Der Speicher 50 umfasst eine Laufzeitumgebung 52, beispielsweise in Form eines Java Card™ Runtime Environments, welche ihrerseits eine Klassenbibliothek und eine Virtuelle Maschine zum Ausführen entsprechender Applikationen 53, 53' umfasst, beispielsweise in Form von Java Card™ Applets. Wie nachfolgend erläutert, können die Applikationen 53, 53' auf verschiedene Arten codiert in dem Speicher 50 vorliegen. In der Regel erfolgt die Codierung nach einem so genannten Zwischencode, beispielsweise dem standardisierten Java Card™ Bytecode oder einem datenträgerspezifischen Zwischencode, welcher beispielsweise auch als Bytecode vorgesehen sein kann. Teile der Laufzeitumgebung 52 oder die gesamte Laufzeitumgebung 52 können auch in dem ROM-Speicher 40 gespeichert sein.

Zum Ausführen der Applikationen 53,53' wird der entsprechende Zwischencode, gemäß dem die Applikationen 53, 53' codiert sind, von einer Interpretationseinrichtung 54 des Datenträgers 10 interpretiert. Dabei werden Codewörtern des Zwischencodes Maschinenoperationen des Prozessors 30 zugeordnet. Die Aufgabe der Interpretationseinrichtung 54 kann von der genannten Virtuellen Maschine übernommen werden oder aber separat implementiert sein. Zum Interpretieren eines nachfolgend genauer erläuterten, datenträgerspezifischen Zwischencodes greift die Interpretationseinrichtung 54 auf eine Sprungtabelle 55 zu, welche an den datenträgerspezifischen Zwischencode angepasst ist und entsprechenden Codewörtern des datenträgerspezifischen Zwischencodes Maschinenoperationen des Prozessors 30 zuordnet.

Der Speicher 50 umfasst weiterhin eine Umwandlungseinrichtung 56, mittels derer der Datenträger 10 in der Lage ist, eine Applikation 53, welche gemäß einem vorgegebenen Zwischencode gegeben ist, beispielsweise gemäß dem standardisierten Java Card™ Bytecode, in einen datenträgerspezifischen Zwischencode umzuwandeln und gegebenenfalls in umgewandelter Form in dem Datenträger 10 zu speichern. Dazu kann die Umwandlungseinrichtung 56 auf eine nachstehend genauer beschriebene Umwandlungstabelle 57 zugreifen.

Der flüchtige, wiederbeschreibbare RAM-Speicher 60 dient dem Datenträger 10 als Arbeitsspeicher.

Wie nachstehend mit Bezug auf Fig. 2 beschrieben, ist der Datenträger 10 geeignet und eingerichtet, ein Verfahren zum Ausführen einer Applikation 53,53' durchzuführen, welche auf dem Datenträger 10 gemäß einem datenträgerspezifischen Zwischencode gespeichert ist. Dadurch, dass die Applikation 53' auf dem Datenträger 10 gemäß dem nachstehend beschriebenen datenträgerspezifischen Zwischencode gespeichert ist, kann allgemein die Sicherheit des Datenträgers 10 verbessert werden.

Zum einen wird es möglich zu verhindern, dass ein erfolgreicher Angriff auf einen Datenträger 10 einer ersten Gruppe von Datenträgern, die in einem ersten Anwendungsgebiet, beispielsweise im Zusammenhang mit Zahlungstransaktionen, zum Einsatz kommen, negative Folgen für baugleiche Datenträger 10 einer zweiten Gruppe von Datenträgern hat, welche in einem anderen Anwendungsbereich, beispielsweise im Zusammenhang mit Telekommunikationsdiensten, verwendet werden. Dies gilt zumindest dann, wenn der Angriff auf die erste Gruppe auf einer Interpretation des Zwischencodes, gemäß dem die auf den entsprechenden Datenträgern 10 gespeicherten Applikationen codiert sind, beruht. Wenn dann Applikationen auf den Datenträger der zweiten Gruppe gemäß einem anderen, für die zweite Gruppe spezifischen Zwischencode codiert sind, läuft der Angriff, welcher für die erste Gruppe noch erfolgreich war, für die zweite Gruppe ins Leere.

Das gleiche gilt analog für Angriffe, welche für solche Datenträger 10 erfolgreich waren, deren Applikationen dort gemäß einem vorgegebenen, standardisierten Zwischencode, beispielsweise gemäß dem Java Card™ Bytecode, codiert gespeichert sind. Solche Angriffe könnten sowohl durch Datenträger 10 der ersten Gruppe als auch Datenträger 10 der zweiten Gruppe erfolgreich abgewehrt werden, da sich der jeweilige datenträgerspezifische Zwischencode von dem vorgegebenen Zwischencode jeweils unterscheidet.

Selbstverständlich kann auch einem einzelnen Datenträger 10 ein datenträgerindividueller Zwischencode zugeordnet sein, so dass nur die Applikationen 53' auf diesem speziellen Datenträger 10 gemäß diesem Zwischencode codiert sind.

Im einfachsten Fall liegt der Unterschied der vorstehend beschriebenen Zwischencodes lediglich in einer geeigneten Permutation der Codewörter, wie dies in der nachfolgenden Tabelle 1 knapp skizziert wird.

**Tabelle 1: Codierung gemäß unterschiedlichen Zwischencodes**

| **mnemonic** | **JCVM Bytecode** | **Zwischencode Gruppe 1** | **Zwischencode Gruppe 2** |
|---|---|---|---|
| aaload | 0x24 | 0x81 | 0xE0 |
| aastore | 0x37 | 0xF0 | 0x12 |
| aconst_null | 0x01 | 0xA9 | 0x34 |
| aload | 0x15 | 0x72 | 0x43 |
| ··· | ··· | ··· | ··· |
| nop | 0x00 | 0x77 | 0xAB |
| ··· | ··· | ··· | ··· |

Die Codewörter in der zweiten Spalte codieren die in der ersten Spalte durch ihr jeweiliges Kürzel (mnemonic) angegebenen Operationen gemäß dem Java Card™ Bytecode (vgl. etwa das Dokument "Virtual Machine Specification, Java Card™ Platform, Version 3.0, Classic Edition, Sun Microsystems Inc., März 2008; Kapitel 7). In der dritten und vierten Spalte sind Codewörter angegeben, welche die entsprechenden Operationen gemäß dem der ersten Gruppe bzw. dem der zweiten Gruppe zugeordneten datenträgerspezifischen Zwischencode codieren.

Ein erster Schritt S1 eines genannten Verfahrens besteht somit darin, eine Applikation, welche gemäß einem ersten, vorgegebenen Zwischencode codiert ist, in einen zweiten, datenträgerspezifischen Zwischencode umzuwandeln.

Dieser Schritt kann außerhalb des Datenträgers durchgeführt werden. Anschließend wird die Applikation 53' dann, bereits gemäß dem datenträgerspezifischen Zwischencode codiert, in den Datenträger 10 eingebracht und dort in einem zweiten Verfahrensschritt S2 in einem Speicher 50, 60 des Datenträgers gespeichert.

Der Schritt des Umwandelns kann alternativ auch in dem Datenträger 10 selbst durchgeführt werden. Eine Applikation 53 kann ursprünglich beispielsweise gemäß dem vorgegebenen Zwischencode codiert in dem Speicher 50 gespeichert sein. Eine Umwandlungseinrichtung 56 des Datenträgers 10 ist dann eingerichtet, die Applikation 53 derart umzuwandeln oder umzucodieren, dass diese danach gemäß einem datenträgerspezifischen Zwischencode vorliegt und in einem Speicher 50, 60 des Datenträgers 10 gespeichert werden kann.

Zum Ausführen einer gemäß einem Zwischencode codierten Applikation 53' auf dem Datenträger 10 wird dieser Zwischencode in einem dritten Verfahrensschritt S3 von einer Interpretationseinrichtung 54 des Datenträgers 10 interpretiert.

Dabei werden einzelnen Codewörtern des Zwischencodes nacheinander Maschinenoperationen des Prozessors 30 des Datenträgers 10 zugeordnet. Dieser Ablauf kann mittels einer Schleife, der so genannten "Interpreter-Loop", implementiert werden. Diese Schleife lässt sich beispielsweise mit Hilfe einer Sprungtabelle 55 durchführen, auf welche die Interpretationseinrichtung 54 Zugriff hat. Die hier beschriebene Ausführungsform der vorliegenden Erfindung zeichnet sich insbesondere dadurch aus, dass die Interpretationseinrichtung 54 zum Ausführen einer gemäß dem datenträgerspezifischen Zwischencode gespeicherten Applikation 53' Zugriff auf eine datenträgerspezifische, an den Zwischencode angepasste Sprungtabelle 55 oder einen vergleichbaren datenträgerspezifischen Interpretationsdatensatz hat. Dadurch ist es nicht erforderlich, dass der datenträgerspezifische Zwischencode zum Ausführen der Applikation 53', beispielsweise mittels einer standardisierten Java Card™ Virtuellen Maschine mit Zugriff auf eine standardisierte Sprungtabelle, in den vorgegebenen Zwischencode, beispielsweise den Java Card™ Bytecode, rückumgewandelt wird.

Die vorstehend erläuterte, datenträgerinterne Umwandlung kann zu verschiedenen Zeitpunkten erfolgen, beispielsweise dann, wenn die noch gemäß dem vorgegebenen Zwischencode codierte Applikation 53 in den Datenträger 10 geladen wird. Alternativ kann die Umwandlung aber auch erst in der Interpreter-Loop, d.h. unmittelbar vor dem Interpretieren entsprechender Codewörter, erfolgen.

Vorzugsweise erfolgt die Umwandlung durch die Umwandlungseinrichtung 56 gemäß einer in dem Datenträger 10 gespeicherten Umwandlungstabelle 57. Diese kann beispielsweise derart aufgebaut sein, dass ein Codewort des vorgegebenen Zwischencodes, beispielsweise des Java Card™ Bytecodes, jeweils einen Index der Umwandlungstabelle darstellt und der Tabellenwert zu diesem Index dem entsprechenden Codewort des datenträgerspezifischen Zwischencodes entspricht. Mit Bezug auf die vorstehend partiell angegebenen Codierungen in Tabelle 1 würden die ersten beiden Zeilen der Umwandlungstabelle 57 - für eine Umwandlung des Java Card™ Bytecodes in den Zwischencode für die erste Gruppe - wie folgt aussehen:

**Tabelle 2: Umwandlungstabelle 57**

| |
|---|
| 0x77 |
| 0xA9 |
| ··· |

Wie aus Tabelle 1 ersichtlich, hat die Operation "nop" (no operation) gemäß dem Java Card™ Bytecode das Codewort 0x00 (in hexadezimaler Schreibweise), welches dezimal der "0" entspricht. Die Operation "acons_null" ("push" einer Nullreferenz auf den Operandenstack) ist mit 0x01, d.h. dezimal mit der "1" codiert. Einer bekannten Konvention folgend, dass Tabellenindizes bei "0" beginnend gezählt werden, startet die Umwandlungstabelle 57 mit den in Tabelle 2 gezeigten Zeilen zu den Indizes "0" und "1", da die Operation "nop" gemäß dem Zwischencode für die erste Gruppe mit "0x77" und die Operation "aconst_null" mit "0xA9" codiert werden soll.

Dadurch, dass der datenträgerspezifische Zwischencode grundsätzlich frei gewählt werden kann, ergeben sich weitere Vorteile. Insbesondere kann der Zwischencode derart ausgewählt werden, dass spezielle Angriffe auf den Datenträger 10 gezielt verhindert oder zumindest deutlich erschwert werden können, wie dies nachfolgend exemplarisch beschrieben wird.

Die Länge eines Codeworts ist prinzipiell frei wählbar, wobei ein Code mit gleichlangen Codewörtern einfacher interpretierbar ist. Alternativ können beispielsweise auch Präfixcodes eingesetzt werden. Längere Codewörter, welche einen insgesamt größeren Coderaum bedingen, benötigen zwar mehr Speicherressourcen, bieten aber auch die Möglichkeit, zwischen einzelnen gültigen Codes einen größeren Hammingabstand vorzusehen. Nicht belegte Codewörter können Fehlercodes darstellen, d.h. Codewörter, denen keine Maschinenoperation zugeordnet sind und die beim Interpretieren als solche erkannt werden. Eine geeignete Anordnung dieser Fehlercodes im Coderaum ermöglicht beispielsweise das Erkennen von einfachen Angriffen, durch "Kippen" lediglich eines Bits, auf wichtige Codewörter des gewählten Zwischencodes, beispielsweise wenn zumindest im Hammingabstand "1" zu einem solchen Codewort nur Fehlercodes angeordnet sind.

Es ist bekannt, dass verschiedene integrierte Schaltkreise für die vorstehend beschriebenen Datenträger 10 verschiedene Schwächen mit Bezug auf ganz spezielle Angriffe auf den betreffenden Schaltkreis des Datenträgers 10 aufweisen. Beispielsweise kann es für einen Angreifer mit Bezug auf einen speziellen Schaltkreis sehr einfach sein, einen vorgegebenen Wert, beispielsweise eine "0", als manipulierte Eingabe an einer bestimmten Stelle einer Berechnung des Schaltkreises zu erzeugen. Dies kann z.B. dann nachteilig sein, wenn dieser Wert, im Beispiel die "0", einem gültigen Codewort entspricht (vgl. Tabelle 1, gemäß der JCVM-Spezifikation codiert die "0" (hexadezimal 0x00 die Operation "nop").

Dies könnte durch einen Angreifer in der folgenden Weise ausgenutzt werden: Ein gegebener Bytecode mit Operanden wird derart manipuliert, beispielsweise mittels eines gezielten Lichtblitzes, dass der Bytecode zu 0x00, d.h. zu "0", verändert wird. Entsprechend würde dieser manipulierte Bytecode als "nop" ("no operation") interpretiert werden. Die Operanden des ursprünglichen, nun veränderten Bytecodes würden dann selbst als Codewörter interpretiert werden, wodurch ein Angreifer schädlichen Code unerkannt zur Ausführung bringen könnte. Eine geeignete Abwehrmaßnahme besteht im Rahmen der vorliegenden Erfindung beispielsweise darin, gemäß dem wählbaren datenträgerspezifischen Zwischencode für einen Angreifer leicht erzeugbare Codewörter, hier die "0", als Fehlercodes vorzusehen.

Weiterhin kann es gemäß einem datenträgerspezifischen Zwischencode vorgesehen sein, dass ähnlichen Operationen, deren Vertauschung im Berechnungsablauf nicht unbedingt erkannt werden könnte, Codewörter mit ausreichendem Hammingabstand zugeordnet werden. Gemäß dem Java Card™ Bytecode liegen beispielsweise die arithmetischen Operationen "sadd" und "ssub", welche Addition und Subtraktion einer "short"-Variable betreffen, bezüglich deren Codierung sehr nahe beieinander: sadd: 0x41, ssub: 0x43. Der Hammingabstand beträgt - betrachtet in Binärdarstellung - wegen der Differenz von 2 lediglich 1. Das gleiche gilt für die Operationen "ifeq"(0x60) und "ifne"(0x61), welche Gleichheit/Ungleichheit zweier "short"-Variablen prüfen.

Einem Angreifer könnte es somit durch "Kippen" lediglich eines Bits gelingen, einen Berechnungsablauf unerkannt dahingehend zu manipulieren, dass eine arithmetische Operation zu einer anderen, verwandten, aber inhaltlich im Wesentlichen entgegengesetzten arithmetischen Operation verändert wird. Dies kann erfindungsgemäß dadurch verhindert werden, dass gemäß einem datenträgerspezifischen Zwischencode derartigen Paaren oder größeren Gruppen verwandter Operationen jeweils Codewörter mit ausreichend großem Hammingabstand zugeordnet werden, so dass es für einen Angreifer erheblich erschwert wird, die beschriebene Manipulation durchzuführen.

Umgekehrt kann es gemäß einem datenträgerspezifischen Zwischencode vorgesehen sein, dass solche Codewörter, welche inhaltlich und/ oder bezüglich eventueller Operanden und/ oder Stackinhalte wesentlich verschiedene Operationen codieren, bezüglich ihres Hammingabstandes, falls dies aufgrund eines beschränkten Coderaums erforderlich ist, nahe beieinander oder gar direkt benachbart zueinander, mit Hammingabstand 1, angeordnet werden. Ein Angriff, welcher dann eines dieser beieinander liegenden Codewörter in ein benachbartes überführen würde, könnte dann seitens des Datenträgers aufgrund der prinzipiellen Verschiedenheit der zugeordneten Operationen als Angriff leichter erkannt werden.

Gemäß einer hier nicht weiter spezifizierten Ausführungsform kann die vorliegende Erfindung dahingehend ausgeweitet werden, dass auch Operanden einzelner gemäß dem datenträgerspezifischen Zwischencode codierten Operationen, welche in der Regel auf einem Stapelspeicher (Stack) bereitgestellt werden, und/ oder Daten in einem Heap-Speicher (nicht gezeigt) des Datenträgers 10 abweichend von einer standardgemäßen Codierung datenträgerspezifisch codiert werden. Beispielsweise könnten die Booleschen Werte "false" und "true", welche standardgemäß mit "0" bzw. "1" codiert sind, und daher nur einen minimalen Hammingabstand aufweisen, datenträgerspezifisch derart umcodiert werden, dass der Hammingabstand vergrößert wird, wodurch es für einen Angreifer deutlich erschwert wird, mittels einer externen Einwirkung auf den Datenträger aus einem "true" ein "false" zu erzeugen oder umgekehrt.

## Patentansprüche

1. Verfahren zum Ausführen einer Applikation (53,53') auf einem Sicherheitsmodul (10) umfassend die Schritte:
- Umwandeln (S1) einer gemäß einem vorgegebenen Code codierten Applikation (53) in einen sicherheitsmodulspezifischen Code,
- Speichern (S2) der in den sicherheitsmodulspezifischen Code umgewandelten Applikation (53') in einem Speicher (50; 60) des Sicherheitsmoduls (10), und
- Ausführen der gespeicherten Applikation (53') in dem Sicherheitsmodul (10),
**dadurch gekennzeichnet, dass**
die Applikation (53, 53') gemäß einem Zwischencode codiert ist, welcher auf dem Sicherheitsmodul (10) interpretierbar ist, wobei zum Ausführen der Applikation (53, 53') der sicherheitsmodulspezifische Zwischencode der Applikation (53') in dem Sicherheitsmodul (10) interpretiert (S3) wird; und
der sicherheitsmodulspezifische Zwischencode abhängig von der für den integrierten Schaltkreis des Sicherheitsmoduls (10) spezifischen Reaktion auf einen vorgegebenen, potentiellen Angriff auf das Sicherheitsmodul ausgewählt wird, wobei eine Anordnung erster gültiger Codewörter zu zweiten gültigen Codewörtern im verfügbaren Codierungsraum für Werte des Zwischencodes und/oder eine Anordnung von Fehlercodes im verfügbaren Codierungsraum für Werte des Zwischencodes ausgewählt wird.

2. Verfahren nach Anspruch 1, **dadurch gekennzeichnet, dass** die in dem sicherheitsmodulspezifischen Zwischencode vorliegende Applikation (53') direkt, insbesondere ohne dass eine vorhergehende Rückumwandlung in den vorgegebenen Zwischencode erfolgt, interpretiert wird.

3. Verfahren nach Anspruch 1 oder 2, **dadurch gekennzeichnet, dass** der Schritt des Interpretierens des sicherheitsmodulspezifischen Zwischencodes mit Hilfe einer sicherheitsmodulspezifischen Vorgabe, insbesondere einer sicherheitsmodulspezifischen Sprungtabelle (55) oder einer sicherheitsmodulspezifischen Sprung-Anweisung, durchgeführt wird, welche vorgegebenen Codewörtern des sicherheitsmodulspezifischen Zwischencodes vorgegebene Maschinenoperationen eines Prozessors (30) des Sicherheitsmoduls (10) zuordnet.

4. Verfahren nach einem der Ansprüche 1 bis 3, **dadurch gekennzeichnet, dass** der Schritt des Umwandelns der in dem vorgegebenen Zwischencode codierten Applikation (53) in den sicherheitsmodulspezifischen Zwischencode außerhalb des Sicherheitsmoduls (10) durchgeführt wird.

5. Verfahren nach einem der Ansprüche 1 bis 3, **dadurch gekennzeichnet, dass** der Schritt des Umwandelns der in dem vorgegebenen Zwischencode codierten Applikation (53) in den sicherheitsmodulspezifischen Zwischencode in dem Sicherheitsmodul (10) durchgeführt wird.

6. Verfahren nach einem der Ansprüche 1 bis 5, **dadurch gekennzeichnet, dass** der Schritt des Umwandelns der in dem vorgegebenen Zwischencode codierten Applikation (53) in den sicherheitsmodulspezifischen Zwischencode mit Hilfe einer Umwandlungstabelle (57) durchgeführt wird, wobei vorzugsweise ein Codewort des vorgegebenen Zwischencodes jeweils einen Index der Umwandlungstabelle (57) darstellt und der Tabellenwert zu diesem Index dem entsprechenden Codewort des sicherheitsmodulspezifischen Zwischencodes entspricht.

7. Verfahren nach einem der Ansprüche 1 bis 6, **dadurch gekennzeichnet, dass** der sicherheitsmodulspezifische Zwischencode sicherheitsmodulindividuell oder abhängig von einer technischen Anwendung des Sicherheitsmoduls (10) ausgewählt wird.

8. Verfahren nach einem der Ansprüche 1 bis 7, **dadurch gekennzeichnet, dass** in dem Schritt des Umwandelns die Reaktion des integrierten Schaltkreises berücksichtigt wird für zumindest zwei unterschiedliche Angriffstypen und/ oder zumindest zwei unterschiedliche Reaktionen auf einen Angriffstyp.

9. Verfahren nach einem der Ansprüche 1 bis 8, **dadurch gekennzeichnet, dass** der vorgegebene Zwischencode als Bytecode, vorzugsweise als Bytecode gemäß der Java Card™-Spezifikation, vorgegeben ist, dass der sicherheitsmodulspezifische Zwischencode als ein Bytecode gewählt wird, dessen Codewörter durch eine Permutation der Codewörter des vorgegebenen Bytecodes bestimmt werden, und dass das Interpretieren des sicherheitsmodulspezifischen Zwischencodes mittels einer auf dem Sicherheitsmodul (10) ausführbaren Virtuellen Maschine, vorzugsweise einer sicherheitsmodulspezifisch angepassten Java Card™ -Virtuellen Maschine, erfolgt.

10. Umwandlungseinrichtung (56) für auf Sicherheitsmodulen (10) interpretierbaren Zwischencode, wobei die Umwandlungseinrichtung (56) eingerichtet ist zum Umwandeln einer gemäß einem vorgegebenen Zwischencode codierten Applikation (53) in einen auswählbaren, sicherheitsmodulspezifischen Zwischencode, wobei der sicherheitsmodulspezifische Zwischencode abhängig von der für den integrierten Schaltkreis eines Sicherheitsmoduls (10) spezifischen Reaktion auf einen vorgegebenen, potentiellen Angriff auf das Sicherheitsmodul ausgewählt wird, wobei eine Anordnung erster gültiger Codewörter zu zweiten gültigen Codewörtern im verfügbaren Codierungsraum für Werte des Zwischencodes und/oder eine Anordnung von Fehlercodes im verfügbaren Codierungsraum für Werte des Zwischencodes ausgewählt wird.

11. Sicherheitsmodul (10), umfassend zumindest einen Speicher (40; 50; 60) zum Speichern einer Applikation (53; 53') sowie einen Prozessor (30) zum Ausführen der Applikation (53; 53'), **dadurch gekennzeichnet, dass** das Sicherheitsmodul (10) eine Interpretationseinrichtung (54) umfasst, die eingerichtet ist, eine in dem Speicher (50; 60) des Sicherheitsmoduls (10) gemäß einem sicherheitsmodulspezifischen Zwischencode gespeicherte Applikation (53') zum Ausführen der Applikation (53; 53') zu interpretieren und das Sicherheitsmodul (10) eine Umwandlungseinrichtung (56) nach Anspruch 10 umfasst.

12. Sicherheitsmodul (10) nach Anspruch 11, **dadurch gekennzeichnet, dass** die Interpretationseinrichtung (54) eingerichtet ist, auf einen in dem Sicherheitsmodul (10) gespeicherten, sicherheitsmodulspezifischen Interpretationsdatensatz, insbesondere eine sicherheitsmodulspezifische Sprungtabelle (55) oder eine sicherheitsmodulspezifische Sprunganweisung, zuzugreifen, in welchem eine Zuordnung von vorgegebenen Codewörtern des sicherheitsmodulspezifischen Zwischencodes zu vorgegebenen Maschinenoperationen des Prozessors (30) des Sicherheitsmoduls (10) angegeben ist.

13. Sicherheitsmodul (10) nach Anspruch 11 oder 12, **dadurch gekennzeichnet, dass** die Umwandlungseinrichtung (56) eingerichtet ist, auf eine in dem Sicherheitsmodul (10) gespeicherte Umwandlungsstabelle (57) zuzugreifen, wobei vorzugsweise ein Codewort des vorgegebenen Zwischencodes jeweils einen Index der Umwandlungstabelle (57) darstellt und der Tabellenwert zu diesem Index dem entsprechenden Codewort des sicherheitsmodulspezifischen Zwischencodes entspricht.

## Claims

1. A method for executing an application (53, 53') on a security module (10), comprising the steps of:
converting (S1) an application (53) encoded according to a predetermined code into a security-module specific code, storing (S2) the application (53') converted into the security-module specific code in a memory (50; 60) of the security module (10); and executing the stored application (53') in the security module (10); **characterized in that** the application (53, 53') is encoded according to an intermediate code which is interpretable on the security module (10), wherein for executing the application (53, 53') the security-module specific intermediate code of the application (53') is interpreted (S3) in the security module (10); and
the security-module specific intermediate code is selected in dependence on the response to a predetermined, potential attack on the security module specific to the integrated circuit of the security module (10), wherein an arrangement is selected of first valid code words to second valid code words in the available encoding space for valuesof the intermediate code and/or an arrangement is selected of error codes in the available encoding space for valuesof the intermediate code.

2. The method according to claim 1, **characterized in that** the application (53') present in the security-module specific intermediate code is interpreted directly, in particular without a previous reverse conversion to the predetermined intermediate code being effected.

3. The method according to claim 1 or 2, **characterized in that** the step of interpreting the security-module specific intermediate code is carried out with the aid of a security-module specific specification, in particular a security-module specific branch table (55) or a security-module specific branch instruction, which allocates predetermined machine operations of a processor (30) of the security module (10) to predetermined code words of the security-module specific intermediate code.

4. The method according to any of the claims 1 to 3, **characterized in that** the step of converting the application (53) encoded in the predetermined intermediate code into the security-module specific intermediate code is carried out outside of the security module (10).

5. The method according to any of the claims 1 to 3, **characterized in that** the step of converting the application (53) encoded in the predetermined intermediate code into the security-module specific intermediate code is carried out in the security module (10).

6. The method according to any of the claims 1 to 5, **characterized in that** the step of converting the application (53) encoded in the predetermined intermediate code into the security-module specific intermediate code is carried out with the aid of a conversion table (57), wherein preferably a code word of the predetermined intermediate code in each case represents an index of the conversion table (57) and the table value assigned to this index corresponds to the corresponding code word of the security-module specific intermediate code.

7. The method according to any of the claims 1 to 6, **characterized in that** the security-module specific intermediate code is selected security-module individually or in dependence on a technical application of the security module (10).

8. The method according to any of the claims 1 to 7, **characterized in that** in the step of converting, the response of the integrated circuit is taken into consideration for at least two different types of attack and/or at least two different responses to an attack type.

9. The method according to any of the claims 1 to 8, **characterized in that** the predetermined intermediate code is predetermined as a byte code, preferably as a byte code according to the Java Card™ specification, that the security-module specific intermediate code is selected as a byte code whose code words are determined by a permutation of the code words of the predetermined byte code, and that the interpretation of the security-module specific intermediate code is effected by means of a virtual machine executable on the security module (10), preferably a Java-Card™ virtual machine adapted in security-module specific fashion.

10. A conversion device (56) for intermediate code interpretable on security modules (10), wherein the conversion device (56) is adapted to convert an application (53) encoded according to a predetermined intermediate code into a selectable, security-module specific intermediate code, wherein the security-module specific intermediate code is selected in dependence on the response to a predetermined, potential attack on the security module specific to the integrated circuit of a security module (10), wherein an arrangement is selected of first valid code words to second valid code words in the available encoding space for valuesof the intermediate code and/or an arrangement is selected of error codes in the available encoding space for valuesof the intermediate code.

11. A security module (10) comprising at least one memory (40; 50; 60) for storing an application (53; 53') and a processor (30) for executing the application (53; 53'), **characterized in that** the security module (10) comprises an interpretation device (54) which is adapted to interpret an application (53') stored in the memory (50; 60) of the security module (10) according to a security-module specific intermediate code for executing the application (53; 53'), and the security module (10) comprises a converting device (56) according to claim 10.

12. The security module (10) according to claim 11, **characterized in that** the interpretation device (54) is adapted to access a security-module specific interpretation data set stored in the security module (10), in particular a security-module specific branch table (55) or a security-module specific branch instruction, in which there is specified an allocation of predetermined code words of the security-module specific intermediate code to predetermined machine operations of the processor (30) of the security module (10).

13. The security module (10) according to claim 11 or 12, **characterized in that** the conversion device (56) is adapted to access a conversion table (57) stored on the security module (10), wherein preferably a code word of the predetermined intermediate code in each case represents an index of the conversion table (57) and the table value assigned to this index corresponds to the corresponding code word of the security-module specific intermediate code.

## Revendications

1. Procédé d'exécution d'une application (53, 53') sur un module de sécurité (10), comprenant les étapes :
- conversion (S1) d'une application (53) codée conformément à un code prédéterminé en un code spécifique au module de sécurité,
- mémorisation (S2) de l'application (53') convertie en le code spécifique au module de sécurité dans une mémoire (50; 60) du module de sécurité (10), et
- exécution, dans le module de sécurité (10), de l'application (53') mémorisée,
**caractérisé en ce que**
l'application (53, 53') est codée conformément à un code intermédiaire interprétable sur le module de sécurité (10), cependant que, pour l'exécution de l'application (53, 53'), le code intermédiaire spécifique au module de sécurité de l'application (53') est interprété (S3) dans le module de sécurité (10) ; et
le code intermédiaire spécifique au module de sécurité est sélectionné en fonction de la réaction, spécifique du circuit intégré du module de sécurité (10), à une attaque potentielle prédéterminée visant le module de sécurité, cependant qu'un agencement de premiers mots de code valides par rapport à de deuxièmes mots de code valides dans l'espace de codification disponible pour des valeurs du code intermédiaire et/ou un agencement de codes d'erreur dans l'espace de codification disponible pour des valeurs du code intermédiaire est sélectionné.

2. Procédé selon la revendication 1, **caractérisé en ce que** l'application (53') se trouvant dans le code intermédiaire spécifique au module de sécurité est interprétée directement, en particulier sans qu'une reconversion préalable en le code intermédiaire prédéterminé n'ait lieu.

3. Procédé selon la revendication 1 ou 2, **caractérisé en ce que** l'étape de l'interprétation du code intermédiaire spécifique au module de sécurité est effectuée à l'aide d'une spécification spécifique au module de sécurité, en particulier d'une table de sauts (55) spécifique au module de sécurité ou d'une instruction de sauts spécifique au module de sécurité qui affecte à des mots de code prédéterminés du code intermédiaire spécifique au module de sécurité des opérations par machine prédéterminées d'un processeur (30) du module de sécurité (10).

4. Procédé selon une des revendications de 1 à 3, **caractérisé en ce que** l'étape de la conversion de l'application (53) codée dans le code intermédiaire prédéterminé en le code intermédiaire spécifique au module de sécurité est effectuée à l'extérieur du module de sécurité (10).

5. Procédé selon une des revendications de 1 à 3, **caractérisé en ce que** l'étape de la conversion de l'application (53) codée dans le code intermédiaire prédéterminé en le code intermédiaire spécifique au module de sécurité est effectuée dans le module de sécurité (10).

6. Procédé selon une des revendications de 1 à 5, **caractérisé en ce que** l'étape de la conversion de l'application (53) codée dans le code intermédiaire prédéterminé en le code intermédiaire spécifique au module de sécurité est effectuée à l'aide d'une table de conversion (57), cependant que, de préférence, un mot de code du code intermédiaire prédéterminé représente respectivement un index de la table de conversion (57), et la valeur de table relative à cet index correspond au mot de code correspondant du code intermédiaire spécifique au module de sécurité.

7. Procédé selon une des revendications de 1 à 6, **caractérisé en ce que** le code intermédiaire spécifique au module de sécurité est sélectionné de telle sorte qu'il est individuel au module de sécurité ou dépendant d'une application technique du module de sécurité (10).

8. Procédé selon une des revendications de 1 à 7, **caractérisé en ce que**, à l'étape de la conversion de l'application (53), la réaction du circuit intégré est prise en compte pour au moins deux types d'attaque différents et/ou au moins deux réactions différentes à un type d'attaque.

9. Procédé selon une des revendications de 1 à 8, **caractérisé en ce que** le code intermédiaire prédéterminé est prédéterminé sous forme de code à octets, de préférence sous forme de code à octets conforme à la spécification Java Card™, **en ce que** le code intermédiaire spécifique au module de sécurité est sélectionné sous forme de code à octets dont les mots de code sont déterminés par une permutation des mots de code du code à octets prédéterminé, et **en ce que** l'interprétation du code intermédiaire spécifique au module de sécurité a lieu au moyen d'une machine virtuelle exécutable sur le module de sécurité (10), de préférence au moyen d'une machine virtuelle Java Card™ adaptée spécifiquement au module de sécurité.

10. Dispositif de conversion (56) pour code intermédiaire interprétable sur modules de sécurité (10), le dispositif de conversion (56) étant configuré pour la conversion d'une application (53) codée conformément à un code intermédiaire prédéterminé en un code intermédiaire sélectionnable spécifique au module de sécurité, cependant que le code intermédiaire spécifique au module de sécurité est sélectionné en fonction de la réaction, spécifique du circuit intégré du module de sécurité (10), à une attaque potentielle prédéterminée visant le module de sécurité, cependant qu'un agencement de premiers mots de code valides par rapport à de deuxièmes mots de code valides dans l'espace de codification disponible pour des valeurs du code intermédiaire et/ou un agencement de codes d'erreur dans l'espace de codification disponible pour des valeurs du code intermédiaire est sélectionné.

11. Module de sécurité (10), comprenant au moins une mémoire (40; 50; 60) destinée à la mémorisation d'une application (53; 53') ainsi qu'un processeur (30) destiné à l'exécution de l'application (53; 53'), **caractérisé en ce que** le module de sécurité (10) comprend un dispositif d'interprétation (54) configuré pour interpréter une application (53') mémorisée conformément à un code intermédiaire spécifique au module de sécurité dans la mémoire (50; 60) du module de sécurité (10) de manière à exécuter l'application (53; 53'), et **en ce que** le module de sécurité (10) comprend un dispositif de conversion (56) selon la revendication 10.

12. Module de sécurité (10) selon la revendication 11, **caractérisée en ce que** le dispositif d'interprétation (54) est configuré pour accéder à un jeu de données d'interprétation spécifique au module de sécurité et mémorisé dans le module de sécurité (10), en particulier à une table de sauts (55) spécifique au module de sécurité ou à une instruction de sauts spécifique au module de sécurité dans laquelle une affectation de mots de code prédéterminés du code intermédiaire spécifique au module de sécurité à des opérations par machine prédéterminées du processeur (30) du module de sécurité (10) est indiquée.

13. Module de sécurité (10) selon la revendication 11 ou 12, **caractérisée en ce que** le dispositif de conversion (56) est configuré pour accéder à une table de conversion (57) mémorisée dans le module de sécurité (10), cependant que, de préférence, un mot de code du code intermédiaire prédéterminé représente respectivement un index de la table de conversion (57), et la valeur de table relative à cet index correspond au mot de code correspondant du code intermédiaire spécifique au module de sécurité.
